# EUROPÄISCHE PATENTANMELDUNG

(11) **EP 1 317 053 A1**
(43) Veröffentlichungstag der Anmeldung: **04.06.2003**
(21) Anmeldenummer: 01125922.3
(22) Anmeldetag: 30.10.2001
(51) Int. Cl.: H02M 1/15

(54) **Überspannungskompensator**

(71) Anmelder: aixcon Elektrotechnik GmbH, 52222 Stolberg (DE)
(72) Erfinder: Swiontek, Karl, 52224 Stolberg (DE); Gerads, Georg, 52060 Aachen (DE)
(74) Vertreter: Springorum, Harald, Dr.

(57) **Zusammenfassung**

Überspannungskompensator zur Bedämpfung von Überspannungen mit einem Wandler (2), einem Ausgangsspannungskreis (6) und einem Kondensator (4), wobei der Kondensator (4) beim jeweiligen Einschalten des Wandlers (2) parallel zugeschaltet wird.

## Beschreibung

Die vorliegende Erfindung betrifft einen Überspannungskompensator zur Bedämpfung von Überspannungen.

Die in einem Schwingkreis durch abrupte Spannungsänderungen erzeugte Schwingkreisanregung, welche unter Umständen die Sperrspannung zwischengeschalteter Halbleiter, etwa Gleichrichterdioden überschwingen kann, wird durch Hochsetzen der Sperrspannung der Halbleiter verhindert. Hierbei wird allerdings leicht eine sehr hohe Sperrspannung am Halbleiter, etwa an der Kathoden-Anoden-Strecke der Diode erreicht.

Unzulässig hohe Sperrspannungen werden nach dem Stand der Technik heute durch ein passives in Reihe geschaltetes RC-Glied bedämpft. Der Kondensator C nimmt in diesem Fall die Energie des Spannungsüberschwingers auf, der Widerstand R dämpft die eigentliche Schwingung ab. Bei dieser Art der Bedämpfung der Überspannung entsteht allerdings sehr viel Verlustleistung, so daß die Leistung, die durch den Wirkungsgrad der vorgeschalteten Bauelemente, etwa einer Gleichrichterdiode, mitbestimmt wird, nicht weiter mitgeführt und umgesetzt werden kann. Weiterhin erweist sich die Bedämpfung der Überspannung an der Kathoden - Anoden Strecke mit Hilfe des passiven RC-Gliedes in einigen Fällen als unzureichend.

Aufgabe der vorliegenden Erfindung ist es daher eine wirksame Schaltungsanordnung für die Reduzierung von Überspannungsspitzen anzugeben, welche Leistungsverluste reduziert, den Wirkungsgrad steigert und die Ausnutzung vorgeschalteter Bauelemente, etwa von Gleichrichterdioden, verbessert.

Die Aufgabe wird erfindungsgemäß durch einen Überspannungskompensator zur Bedämpfung von Überspannungen mit einem Wandler, einem Ausgangsspannungskreis und einem Kondensator gelöst, wobei der Kondensator beim jeweiligen Einschalten des Wandlers parallel zugeschaltet wird.

Der Ausgangsspannungskreis, welcher auch ein einfacher Schwingkreis sein kann, und der Kondensator, der parallel zugeschaltet werden kann, haben bis zum Zeitpunkt des Einschaltens des Wandlers die gleiche Spannung Uₐ. Wird nun der Wandler eingeschaltet, so wird durch ein Schaltelement der Kondensator parallel zugeschaltet. Die durch das Einschalten des Wandlers abrupte (plötzliche) Spannungsänderung und die damit verbundene Energie des Überspannungspulses wird durch den Kondensator aufgenommen und gespeichert. Sie steht nicht mehr zur Erzeugung eines Spannungsüberschwingers zur Verfügung. Es sei der Vollständigkeit halber nur erwähnt, daß der Ausgangsspannungskreis - etwa im Falle der Verwendung in komplexeren Schaltungen, wie vorzugsweise einem Wechselrichter - selbst selbstverständlich auch wieder Einganspannungskreis einer weiteren Schaltung und damit Strom- oder Spannungszwischenkreis sein kann.

In einer bevorzugten Ausführungsform des Überspannungskompensators zur Bedämpfung von Überspannungen wird das parallele Zuschalten des Kondensators mit Hilfe eines Halbleiters, vorzugsweise eines Transistors vorgenommen. Hierdurch kann die Spannungshöhe durch geeignete Wahl des Halbleiters, etwa des Transistors, so eingestellt werden, dass der Kondensator gezielt zugeschaltet werden kann. Dadurch kann eine mögliche Überspannungsspitze möglichst optimal herausgefiltert werden.

Vorzugsweise erhält der erfindungsgemäße Überspannungkompensator sein Signal zur Zuschaltung des Kondensators von dem Wandler.

So kann etwa der Halbleiter, vorzugsweise Transistor zum Zuschalten des Kondensators direkt mit dem Wandler, verschaltet sein, so daß der Spannungsimpuls ohne Zeitverzögerung als Schaltsignal weiterverwendet werden kann. Hierzu kann eine Verbindung des Transistors mit den jeweiligen Leistungsschaltern des Wandlers, etwa eines Gegentaktwandlers, der so etwa zwei Leistungsschalter aufweist, dienen.

Wie bereits zuvor angedeutet, ist eine weitere Ausführungsform eines Überspannungskompensators zur Bedämpfung von Überspannungen nach der vorliegenden Erfindung dadurch gekennzeichnet, daß als Wandler ein Gegentaktwandler oder ein Halbbrückenwandler oder ein Vollbrückenwandler oder ein Flußwandler oder auch ein Sperrwandler verwendet wird und das Signal zur Zuschaltung des Kondensators jeweils von zumindest einem der primären Leistungsschalter des Wandlers, vorzugsweise von allen, etwa durch deren Schalten selbst, übermittelt wird.

Auch kann der erfindungsgemäße Überspannungskompensator so ausgestaltet werden, daß die Zuschaltung des Kondensators bei Abschalten des Wnadlers wieder aufgehoben wird, wobei die Aufhebung der Zuschaltung ebenfalls durch den Halbleiter, vorzugsweise Transistor, erfolgen kann. Hierbei wird hinter dem Kondensator parallel zum Halbleiter, vorzugsweise Transistor, eine weitere Diode geschaltet, welche nach dem Abschalten des Wandlers und damit auch des Halbleiters, vorzugsweise Transistors, die zuvor gespeicherte Energie an den Ausgangsspannungskreis abgibt. Der Kondensator ist danach sofort für eine weitere Aufladung einsatzbereit.

Eine bevorzugte Ausführungsform des erfindungsgemäßen Überspannungskompensators ist dadurch gekennzeichnet, daß beim Schalten des Halbleiters, vorzugsweise Transistors, zum Zuschalten wie zur Aufhebung der Zuschaltung der variable Tastgrad der Leistungsschalter berücksichtigt wird. Dies ist besonders wichtig in Fällen, in denen dieser Tastgrad stark variiert. So kann etwa bei Verwendung einer Gegentaktschaltung als DC-DC-Wandler der Tastgrad von 0 bis knapp unter 50 % variieren.

In einer weiteren Ausführungsform eines erfindungsgemäßen Überspannungskompensators zur Bedämpfung von Überspannungen ist der Überspannungskompensator auf die Ausgangsseite einer Gleichrichterbrücke, vorzugsweise einer B4-Gleichrichterbrücke, geschaltet und wird hier zur Bedämpfung von Spannungsspitzen verwendet. Hierdurch wird eine möglichst gleichmäßige Stromzulieferung garantiert. Der Kondensator puffert in diesem Fall nur die Spannungsspitzen, die durch das Einschalten des Wandlers erzeugt werden.

Der erfindungsgemäße Überspannungskompensator zur Bedämpfung von Überspannungen eignet sich besonders zur Verwendung in Wechselrichtern. So etwa in einem Wechselrichter, bei welchem, etwa von einem Hochfrequenztransformator, über einen als Zwischenkreis im Wechselrichter angeordneten Gleichrichter, weitergeleitete Spannungsspitzen - auch noch periodisch - auftreten. Bei einem derartigen Wechselrichter ist der Aspekt der Leistungserhaltung durch den Einsatz des erfindungsgemäßen aktiven Kompensators besonders vorteilhaft, da es bei dieser Technologie sonst zu sehr hohen Leistungsverlusten in den vorgeschalteten Bauelementen kommt.

In dieser Verwendung wird eine Gleichrichterbrücke in einem Wechselrichter zur Umformung einer Eingangsgleichspannung in eine netzkonforme Wechselspannung (etwa 230Vac) und zur Einspeisung in das öffentliche Versorgungsnetz benutzt.

Die Eingangsspannung des Wechselrichters wird dabei zur Reduzierung des hochfrequenten Wechselanteils auf dem Eingangsstrom durch einen Kondensator gefiltert. Ein eingangsseitige Gegentaktwandler als Wandler erzeugt aus der Eingangsgleichspannung ein Rechteckspannungssignal mit einer Taktfrequenz von etwa 100kHz, welches mit Hilfe eines Hochfrequenztrafos potentialgetrennt und auf eine Spannung von etwa 380V hochtransformiert wird. Diese Rechteckspannung wird mit Hilfe einer B4-Gleichrichterbrücke gleichgerichtet und mit Hilfe einer Speicherdrossel und etwa von Elektrolytkondensatoren gefiltert. Eine pulsbreitenmodulierte Vollbrücke erzeugt eine sinusmodulierte Spannung, welche über einen Sinusfilter geglättet in das Netz eingespeist wird.

Hier dient dann ein Kondensator, der zum Zeitpunkt des Einschaltens des primärseitigen Schalters der Eingangsstufe mit Hilfe eines Halbleiters, vorzugsweise Transistors auf die Ausgangsseite der B4-Gleichrichterbrücke geschaltet und zum Zeitpunkt des Ausschaltens des primärseitigen Schalters wieder getrennt wird. Zum Zeitpunkt des Einschaltens ist der Kondensator auf die Spannung eines nachfolgenden Ausgangsspannungskreises aufgeladen. Er nimmt beim Einschalten des Halbleiters, vorzugsweise Transistors, die Energie des Überspannungspulses auf. Beim Ausschalten des Halbleiters, vorzugsweise Transistors, gibt er diese aufgenommene Energie über eine Freilaufdiode an den nachfolgenden Ausgangsspannungskreis wieder ab. Dabei muß der Einschalt- und Ausschaltzeitpunkt des Halbleiters, vorzugsweise Transistors, für das Ergebnis der Überspannungsbedämpfung beachtet werden.

Im folgenden werden nicht einschränkend zu verstehende Ausführungsbeispiele der vorliegenden Erfindung anhand der Zeichnung besprochen. In dieser zeigen:
- Fig.**1**: eine schematische Darstellung eines DC-DC-Wandlers mit einer B4-Gleichrichterbrücke und einem erfindungsgemäßen Überspannungskompensator,
- Fig.**2**: Zeit-Spannungskurve einer Messung am Ausgang des erfindungsgemäßen Überspannungskompensators, und
- Fig.**3**: Zeit-Spannungskurve einer Messung mit dem passiven RC-Glied zur Bedämpfung von Überspannungspulsen.

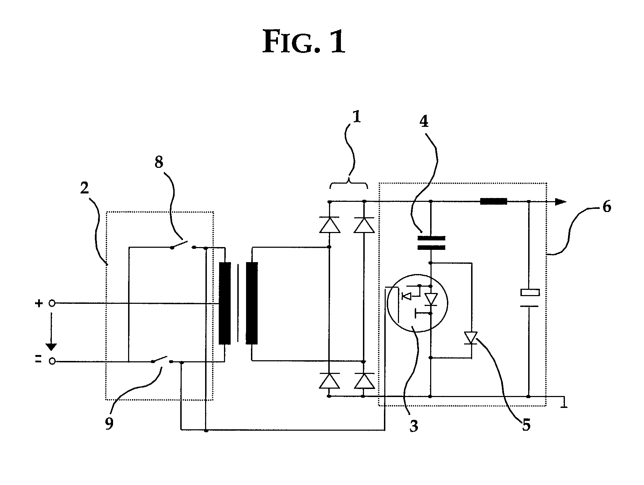

**Fig. 1** zeigt die schematische Darstellung eines DC-DC-Wandlers mit einer B4-Gleichrichterbrücke **1** und einem erfindungsgemäßen Überspannungskompensator. Der als Gegentaktwandler ausgeführte DC-DC-Wandler **2** erzeugt aus der Eingangsgleichspannung ein Rechteckspannungssignal mit einer entsprechenden Taktfrequenz. (Werte um 100 kHz können hier durchaus auftreten.) Dieses Rechteckspannungssignal wird danach mit Hilfe eines Transformators, vorzugsweise eines Hochfrequenztransformator, etwa eines Planartransformators, potentialgetrennt und auf die gewünschte Spannung hochtransformiert. Hiernach wird die Rechteckspannung mit Hilfe der B4-Gleichrichterbrücke **1** gleichgerichtet. Das Einschalten der primärseitigen Schalter **8, 9** der Eingangsstufe des Wechselrichters bewirkt auch jeweils ein Einschalten des Transistors **3** auf der Ausgangsseite der B4-Geichrichterbrücke **1.** Dabei nimmt der Kondensator **4** die Energie des Überspannungspulses auf. Beim Ausschalten des Transistors **3** gibt der Kondensator **4** diese Energie über die nachgeschaltete Diode **5** oder über eine interne Freilaufdiode des Transistors wieder an einen Ausgangsspannungskreis **6** ab. Der Transistor **3** kann so eingestellt werden, dass er den optimalen Ein- bzw. Ausschaltzeitpunkt für die effektivste Überspannungsbedämpfung findet. Der DC-DC-Wandler **2**, (hier ein Gegentaktwandler), wird pulsbreitenmoduliert, wobei die Ein- und Ausschaltzeiten für die Leistungsschalter **8, 9** verschieden lang werden. Dieser variable Tastgrad wird bei der Ansteuerung des Transistors **3** berücksichtigt und zeichnet die Schaltung aus.

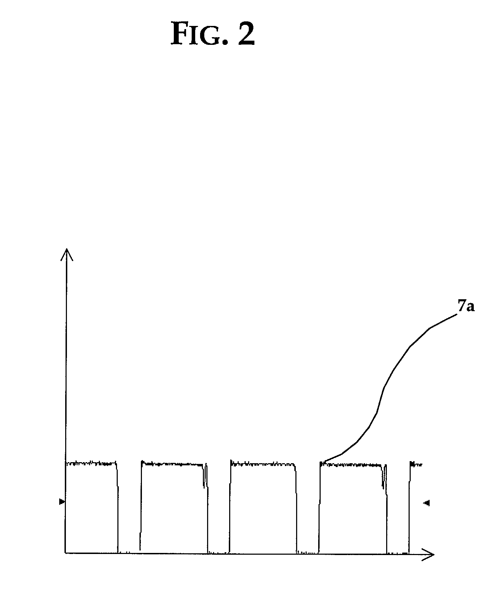

Fig. **2** zeigt eine Zeit-Spannungskurve einer Messung am Ausgang des erfindungsgemäßen Überspannungskompensators. Es ist hierbei deutlich zu sehen, dass bei Einschalten des Wandlers ein gerader Spannungsverlauf **7a** bei der ersten Kurve auftritt. Dies wird durch das zeitgenaue parallele Zuschalten des Kondensators **4** bewirkt, da die Energie der auftretenden Überspannungsspitze nun mit der gesamten Kapazität des Kondensators **4** gedämpft wird.

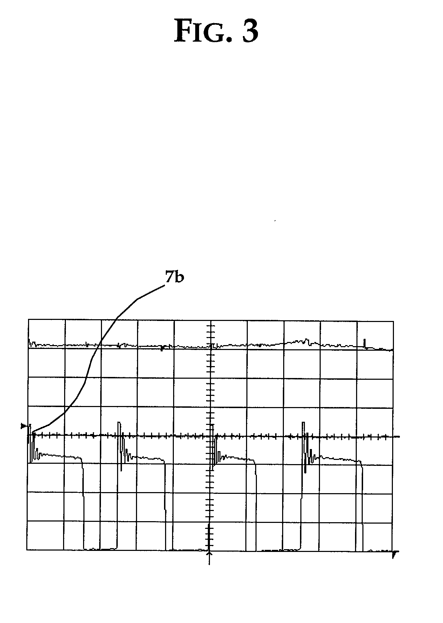

Fig. **3** zeigt dagegen die Zeit-Spannungskurve einer Messung mit dem passiven RC-Glied zur Bedämpfung von Überspannungspulsen. Hier ist beim Zuschalten des Wandlers eine deutliche Überspannungsspitze **7b** zu erkennen. Die beiden weiteren in der Figur **3** dargestellten aber nicht gekennzeichneten Kurven sind für diese Erfindung nicht relevant.

## Patentansprüche

1. Überspannungskompensator zur Bedämpfung von Überspannungen mit einem Wandler **(2),** vorzugsweise einer getakteten Strom- oder Sopannungsquelle, einem Ausgangsspannungskreis **(6)** und einem Kondensator **(4),** wobei der Kondensator **(4)** beim jeweiligen Einschalten des Wandlers (2) parallel zugeschaltet wird.

2. Überspannungskompensator zur Bedämpfung von Überspannungen nach Anspruch 1, **dadurch gekennzeichnet, daß** das parallele Zuschalten des Kondensators **(4)** mit Hilfe eines Halbleiters, vorzugsweise eines Transistors **(3)** geschieht.

3. Überspannungskompensator zur Bedämpfung von Überspannungen nach Anspruch 1 oder 2, **dadurch gekennzeichnet, daß** der Überspannungskompensator sein Signal zur Zuschaltung des Kondensators **(4)** von dem Wandler **(2)** erhält.

4. Überspannungskompensator zur Bedämpfung von Überspannungen nach Anspruch 3, **dadurch gekennzeichnet, daß** als Wandler **(2)** ein Gegentaktwandler oder ein Halbbrükkenwandler oder ein Vollbrückenwandler oder ein Flußwandler oder auch ein Sperrwandler verwendet wird und der Überspannungskompensator sein Signal zur Zuschaltung des Kondensators **(4)** jeweils von zumindest einem der primären Leistungsschalter **(8, 9)** des Wandlers **(2)** übermittelt wird.

5. Überspannungskompensator zur Bedämpfung von Überspannungen nach einem der Ansprüche 1 bis 4, **dadurch gekennzeichnet, daß** die Zuschaltung des Kondensators **(4)** bei Abschalten der Wandlers **(2)** aufgehoben wird.

6. Überspannungskompensator zur Bedämpfung von Überspannungen nach Anspruch 5 soweit dieser auf 2 rückbezogen ist, **dadurch gekennzeichnet, daß** die Aufhebung der Zuschaltung ebenfalls durch den Halbleiter, vorzugsweise Transistor **(3)** erfolgt.

7. Überspannungskompensator zur Bedämpfung von Überspannungen nach einem der Ansprüche 4 - 6, **dadurch gekennzeichnet, daß** beim Schalten des Halbleiters, vorzugsweise Transistors **(3)** zum Zuschalten, wie auch zur Aufhebung der Zuschaltung der variable Tastgrad der Leistungsschalter **(8, 9)** berücksichtigt wird.

8. Verwendung eines Überspannungskompensators nach einem der Ansprüche 1 bis 7 zur Bedämpfung von Überspannungen auf der Ausgangsseite eines Gleichrichters.

9. Verwendung eines Überspannungskompensators nach einem der Ansprüche 1 bis 8 zur Bedämpfung von Überspannungen in einem Wechselrichter auf der Ausgangsseite eines, in dem Wechselrichter als Zwischenkreis dienenden Gleichrichters, vorzugsweise einer Gleichrichterbrücke **(1).**
